# EUROPÄISCHE PATENTANMELDUNG

(11) **EP 0 643 290 A1**
(43) Veröffentlichungstag der Anmeldung: **15.03.1995**
(21) Anmeldenummer: 94114038.6
(22) Anmeldetag: 07.09.1994
(51) Int. Cl.: G01L 5/28, B60T 17/22, B66D 5/30, F16D 59/02

(54) **Einrichtung zur Prüfung, Überwachung und Regelung von mechanischen Bremsen**

(30) Priorität: 10.09.1993 DE 9313575 U; 14.10.1993 DE 9315641 U; 06.04.1994 DE 9405578 U; 06.04.1994 DE 9405579 U
(71) Anmelder: Sudhop, Helmut, Dipl.-Ing., D-28211 Bremen (DE); Höhn, Carsten, D-28832 Achim (DE)
(72) Erfinder: Sudhop, Helmut, Dipl.-Ing., D-28211 Bremen (DE); Höhn, Carsten, D-28832 Achim (DE)

(57) **Zusammenfassung**

Krane werden mit Bremsen ausgerüstet, um die am Haken hängende Last dann sicher in der jeweiligen Höhe zu halten, wenn kein Heben oder Senken vorgesehen ist. Dazu werden in Abhängigkeit des Einsatzes vorwiegend Doppelbackenbremsen, Scheibenbremsen oder Bremsmotoren eingesetzt. Diese Bremsen sind nur für die beiden Zustände "Bremse geöffnet" und "Bremse geschlossen" ausgelegt. Die Bremskraft ist so bemessen, daß die maximale, am Kran hängende Last sicher gehalten wird. Dadurch wird auch bei einer geringen Last ein maximales Bremsmoment erzeugt.
Zur Überprüfung der Funktionsfähigkeit der Bremse werden in einem bestimmten Turnus Überprüfungen durchgeführt. Dazwischen liegende Störungen der Funktion werden oftmals nicht erkannt.
Die Erfindung ist darauf gerichtet, die Größe des Bremsmomentes sowie weitere relevante Einflußfaktoren zu messen und die Bremmskraft davon abhängig nur so groß zu bemessen, daß die Last sicher gehalten wird. Dazu ist eine Einrichtung mit entsprechenden Funktionseinheiten vorgesehen, die an die jeweiligen Einsatzbedingungen anpaßbar ist. Für Trommel- und Scheibenbremsen sowie Bremsmotore sind spezifische Lösungen für die Bremsmomentenerfassung offenbart.
Die Lösung hat vor allem den Vorteil, daß die Bremsen ständig geprüft, überwacht sowie geregelt werden können und nur so große Bremskräfte erzeugt werden, wie unbedingt erforderlich sind. Dadurch erhöhen sich die Betriebssicherheit und die Lebensdauer der Verschleißteile.
Eine turnusmäßige Überprüfung der Bremsen an Krananlagen mit Prüfgewichten ist damit nicht mehr erforderlich.

## Beschreibung

Die Erfindung betrifft eine Einrichtung zur Prüfung, Überwachung und Regelung von Bremsen für rotatorische Bewegungen. Sie eignet sich insbesonders für Trommel- und Scheibenbremsen sowie Bremsmotoren in fördetechnischen Maschinen und Geräten.

Bremsen herkömmlicher Bauart werden z. B. an Hebezeugen und Winden meist als federbelastete Doppelbacken- oder Scheibenbremsen mit elektrischen, hydraulischen oder pneumatischen Lüftgeräten ausgerüstet. Es ist auch bekannt, Bremsmotoren einzusetzen.
Um bei der Entwicklung und dem Einsatz von Bremsen genaue Angaben über die Größe des erzeugten Bremsmomentes zu erhalten, werden in der Regel motorgetriebene Bremsenprüfstände benutzt, deren Wirkungsprinzip z. B. darin besteht, daß die Energie von rotierenden Massen berechnet und daraus die geleistete Arbeit der Bremse bestimmt wird. Andere Prüfstände nutzen das notwendige Antriebsmoment des Motors als Meßgröße, um auf das Bremsmoment der zu untersuchenden Bremse zu schließen.
Alle diese Prüfstände benutzen indirekte Meßgrößen, um das Bremsmoment zu bestimmen. Dabei sind neben dem großen technischen Aufwand Meßungenauigkeiten unvermeindlich.
Außerdem ist damit eine Überwachung der Bremsen während des Betriebes nicht möglich.
Die bei den Bremsen verwendeten Lüft- oder Schließgeräte können in der Regel nur die Zustände "Bremse geöffnet" oder "Bremse geschlossen" einstellen. Infolgedessen ist eine Anpassung des Bremsmomentes an die jeweiligen veränderlichen Erfordernisse nicht möglich.
Da sich die Auslegung der Bremsen am jeweils ungünstigsten Einsatzfall orientieren muß, der im praktischen Einsatz oftmals nicht oder nur sehr selten eintritt, ergibt sich z. B. bei kleinen Teillasten an Hebezeugen ein Bremsmomentüberschuß. Dieser Bremsmomentenüberschuß führt zu extremen Beanspruchungen der Getriebe-, Kupplungs- und Motorbauteile, weil immer mit dem maximal vorhandenen Bremsmoment eingewirkt wird.
Die Anpassung des Brems- und Bewegungsverhaltens an die jeweiligen Erfordernisse stellt einen wichtigen Handhabungs- und Sicherheitsaspekt insbesondere bei Hubwerken dar. Deshalb werden bei anspruchsvollen Handhabungsvorgängen Gleichstrommaschinen, geregelte Drehstromantriebe oder Wirbelstrombremsen eingesetzt.
Diese Systeme sind aber sehr teuer und bei Stromausfall bzw. "Not-Aus" nicht wirksam.
Ferner ergeben sich aufgrund der großen Streubreite des Reibwertes zwischen Bremsbacke und -scheibe bzw. -trommel große Auslegungsunsicherheiten und wegen des Verschleißes und der negativen äußeren Einflüsse große Betriebs- und Überwachungsunsicherheiten, sodaß z.B. bei Krananlagen vor der ersten Benutzung eine Abnahmeprüfung und während des Betriebes eine jährlich wiederkehrende Prüfung mit großen Prüflasten im Bereich der Nennhublast durchgeführt werden müssen. Treten in der Zwischenzeit das Bremsmoment verringernde Einflüsse auf, wird dies nicht immer sofort bemerkt oder es kommt zu Havarien.

Die gesetzlich vorgeschriebene Prüfung von Hebezeugen zur Feststellung der Funktionstüchtigkeit der Betriebs-, Halte- und Sicherheitsbremsen erfolgt mit einer Prüflast, die im allgemeinen die vorgesehene Nennlast um einen definierten Betrag überschreitet.
Die hierzu erforderlichen Prüfgewichte sind für große Hebezeuge unhandlich und erfordern den Transport zur Prüfstelle. Außerdem führen die jährlich wiederkehrenden Prüfungen zu einer unverhältnismäßig hohen Belastung des Hebezeuges, was eine Minderung der Lebensdauer zur Folge hat und ein nicht unbeträchtliches Gefahrenpotential in sich birgt.

Der Erfindung liegt die Aufgabe zugrunde, bei mechanischen Bremsen eine Prüfung der Funktionsfähigkeit vor und während dem praktischen Einsatz zu ermöglichen. Zusätzlich soll bei Bedarf außerdem eine ständige Überwachung der Funktion und weiterhin eine Regelung dieser Bremsen vorgenommen werden können. Dazu sind entsprechende Vorrichtungen zur Erfassung der Bremsmomentes bei unterschiedlichen Bremsenarten, zum Vergleich des Sollwertes mit dem tatsächlichen Wert und zur optimalen Beeinflussung der Bremsen unabhängig von deren Verschleiß und von den äußeren Einflußfaktoren zu schaffen.
Diese Aufgabe wird im Prinzip mit den Merkmalen des kennzeichnenden Teils des Anspruchs 1 gelöst. Der Regelkreis, mit dem die Prüfung, Überwachung und belastungsabhängige Regelung der mechanischen Bremsen durchgeführt werden kann, ist im kennzeichnenden Teil des Anspruchs 2 offenbart. Ist nur eine Prüfung oder eine Prüfung und Überwachung vorgesehen, gestaltet sich der Aufbau der Einrichtung entsprechend einfacher.
Die Vorrichtungen zur Erfassung des Bremsmomentes
a) einer Trommelbremse sind im Anspruch 3,
b) einer Scheibenbremse sind in den Ansprüchen 4 und 5 sowie
c) einer Lamellen- oder Kegelbremse als Bestandteil eines Bremsmotores sind im Anspruch 7 offenbart.

Der Regelkreis, mit dem eine Bremse geprüft, überwacht und in Abhängigkeit von den tatsächlichen Bedingungen weg-, last- oder zeitabhängig beeinflußt werden kann, besteht aus der vorstehend genannten Bremsmomentenmeßeinrichtung in den an die jeweilige Bremsart angepaßten Ausführungsform, aus der Signalverarbeitungseinheit und dem Lüft- bzw. Schließgerät. Als Regelgröße wird das Bremsmoment verwendet.
Zusätzlich zu diesem einfachen Regelkreisaufbau ist für weiterführende Automatisierungsaufgaben die Integration von Geräten zur Ermittlung von zusätzlichen Größen vorgesehen. Dazu werden an geeigneten Stellen Meßsysteme für die Erfassung der kinematischen Größen (Beschleunigung, Weg oder Drehzahl) und/oder der Last (z.B. an Krananlagen) und/oder des absoluten Weges installiert. Je nach den einsatzbedingten Anforderungen wird das Bremsmomentregelsystem aus verschiedenen Baugruppen zusammengesetzt. Damit sind z.B. die exakte Regelung des Bremsmomentes entlang einer vorgegebenen Flanke unabhängig von der Last (z.B. Hublast an Krananlagen), die Anpassung des Bremsmomentes an die äußeren Lasten, die Regelung des Bremsmomentes bis zum Stillstand an einem vorgegebenen Punkt (z.B. eine durch Koordinaten vorgegebene Hubhöhe an einem Hubwerk) oder die Realisierung der differenzierenden Wirkung von Bremsen mit Fußpedalbetätigung (z.B. an Drehwerken von Drehkranen) durch eine Regelung möglich. Auch das automatische Zuschalten einer zweiten Bremse (z.B. Sicherheitsbremse) bei hohen Lasten oder verminderter Bremswirkung der Betriebsbremse als "redudantes" Sicherheitssystem ist mit der vorgeschlagenen Einrichtung vorgesehen.
Beim Normalbetrieb des einfachen Regelsystems werden während des Bremsvorgangs mit der Bremsmomentenmeßeinrichtung die Bremsmomente gemessen, durch die Signalverarbeitungseinrichtung erfaßt, verarbeitet und mit einem vorgegebenen Sollwert des Bremsmomentes verglichen. Je nach dem Ergebnis des Vergleiches wird ein Signal gebildet, welches an dem regelbaren Lüft- bzw. Schließgerät an der Bremse ein weiteres Lüften oder Schließen der Bremsbacken oder -zangen veranlaßt. Da dieser Vorgang in einem geschlossenen Regelkreis mit kurzen Signalverarbeitungszeiten abläuft, wird das Bremsmoment an der Bremse innerhalb eines sehr kurzen Zeitraumes unabhängig von äußeren Einflußfaktoren (z.B. veränderliche Reibwerte) auf den vorgegebenen Sollwert eingestellt.
Beim Betrieb des erweiterten Regelsystems werden die auftretenden Meßgrößen wie z.B. Beschleunigung bzw. Weg oder Drehzahl in kleinen diskreten Zeitabständen erfaßt.
Zusätzlich dazu wird das Bremsmoment gemessen, sodaß zu jedem Zeitpunkt die kinematischen Größen des Bewegungsvorganges und das real vorhandene Bremsmoment vorliegen.
Diese Daten werden durch einen Meßrechner mit Hilfe eines mathematischen Modells in Echtzeit verarbeitet. Alternativ kann bei Bremsen an Krananlagen noch eine Hublastmessung und eine absolute Wegmessung in das System integriert sein.
Durch die Auswertung der vorliegenden Daten innerhalb eines kleines Zeitabschnittes Δt während des Bremsvorganges ist es möglich, über eine Regelung des Lüft-/Schließgerätes den Bremsvorgang so zu beinflussen, daß z.B. die Bremsverzögerung einen maximalen Wert nicht übersteigt, ein "sanftes" Ansteigen des Bremsmomentes beim Beginn des Bremsvorganges unter der Berücksichtigung der äußeren Belastungen programmiert und ausgeführt werden kann oder der Bremsvorgang exakt an einem gewählten Haltepunkt beendet ist.
Durch den erfindungsgemäß vorgeschlagenen Aufbau eines Regelkreises zwischen Bremse, Computer und Lüft-/Schließgerät ist auch die Durchführung der wiederkehrenden Prüfung des Bremssystems möglich und vorgesehen. Dazu werden während des Bremsvorganges diejenigen Meßwerte und/oder Signale durch ein externes Prüfsystem ausgelesen, welche die Funktionssicherheit und -güte der Bremse bzw. des gesamten Antriebssystem charakterisieren. Dazu zählen z.B. die Bremsmomente und die kinematischen Größen wie Drehzahlen, Beschleunigungen oder Wege. Daraus werden dann durch ein nachfolgendes Diagnoseprogramm wichtige Kenngrößen der Bremse z. B. Bremsmomentenverlauf während des Bremsvorganges und des gesamten Antriebssystens z.B. der Wirkungsgrad ermittelt und können beurteilt werden. Bei Bedarf ist die Gegenüberstellung der Kenngrößen bzw. -verläufe mit früher aufgenommenen und gespeicherten Daten zur Beurteilung von Verschleiß- und Alterungseinflüssen vorgesehen.
Das externe Diagnosesystem ist ebenfalls zur Überprüfung der ablaufenden Regelvorgänge während des Bremsvorganges einsetzbar.

Durch die Anwendung der erfindungsgemäßen Einrichtung ist eine ständige Überprüfung und Überwachung von mechanischen Bremsen möglich. Es können sowohl allmähliche Veränderungen wie Verschleiß des Bremsbelages, als auch plötzliche Veränderungen wie Einwirkungen von bremsmindernden Medien auf die Reibfläche festgestellt werden. Die jährlich vorgeschriebene Prüfung mit Gewichten ist nicht mehr erforderlich. Damit entfällt die Lagerhaltung und der Transport der Prüfmassen zu den zu prüfenden Geräten.
Durch die erfindungsgemäße belastungsabhängige Regelung der Bremse wird der Verschleiß aller beanspruchten Bauteile verringert, da die tatsächliche Belastung aller Triebwerksbauteile aus Sicherheitsgründen nur um ein geringes größer ist, als sie tatsächlich sein muß.
Es besteht weiterhin der Vorteil, daß in einfacher Weise entweder vorhandene Bremsen nachgerüstet oder neue erfindungsgemäße Vorrichtungen zur Bremsmomenterfassung an Bremsen von vornherein in diese integriert werden können. Für die gesamte Einrichtung können in sehr hohem Maße handelsübliche Bauteile und -gruppen sowie elekronische Gräte verwendet werden.

Die Erfindung wird im folgenden anhand eines Ausführungsbeispieles und mit Bezug auf die Zeichnungen näher erläutert. Es zeigen:
- **Fig. 1**: eine Überwachungseinrichtung für eine Trommelbremse,
- **Fig. 2**: die zu einem einfachen Regelkreis erweiterte Einrichtung nach Fig. 1,
- **Fig. 3**: ein erweitertes Bremsmomentenregelsystem,
- **Fig. 4**: eine Vorrichtung zur Bremsmomentenerfassung für eine Doppelbackenbremse 4a,
- **Fig. 5**: den Schnitt A - A nach Fig. 4,
- **Fig. 6**: eine Vorrichtung nach Fig. 4, bei der die beiden Meßlager mit dem Mittelpunkt der Bremsscheibe in einer Ebene liegen,
- **Fig. 7**: den Schnitt A - A nach Fig. 6,
- **Fig. 8**: eine Vorrichtung zur Bremsmomentenerfassung für eine Scheibenbremse 4b,
- **Fig. 9**: die Vorrichtung nach Fig. 8 in einer anderen Seitenansicht,
- **Fig. 10**: eine Vorrichtung zur Bremsmomentenerfassung für eine Scheibenbremse 4c, bei der eine mechanische Aufteilung der Kraftkomponenten erfolgt ist,
- **Fig. 11**: die Vorrichtung nach Fig. 10 in einer anderen Seitenansicht,
- **Fig. 12**: eine Vorrichtung zur Bremsmomentenerfassung für eine Motorbremse 4d nach Variante I mit einer Lamellenbremse,
- **Fig. 13**: die Vorrichtung nach Fig. 12 in einer anderen Seitenansicht,
- **Fig. 14**: eine als gelenkige Pendelstütze ausgebildete Vorrichtung zur Bremsmomentenerfassung für eine Motorbremse 4d nach Variante II mit einer Kegelbremse,
- **Fig. 15**: die Vorrichtung nach Fig. 14 in einer anderen Seitenansicht.

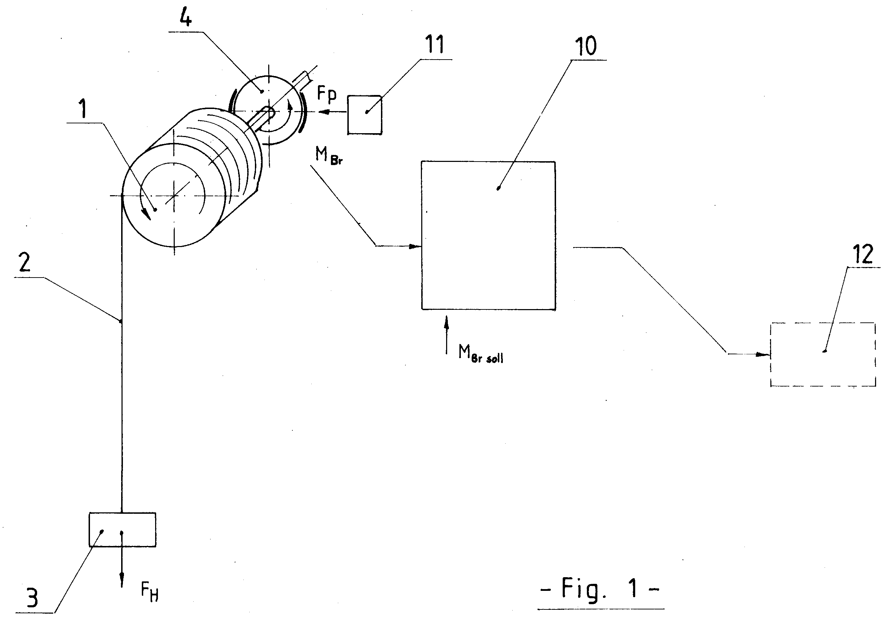

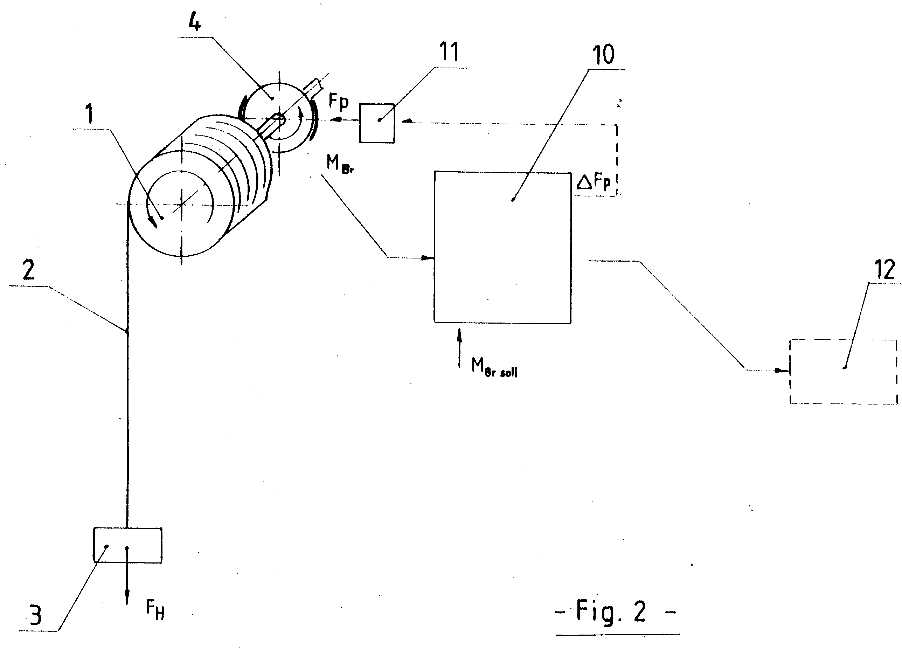

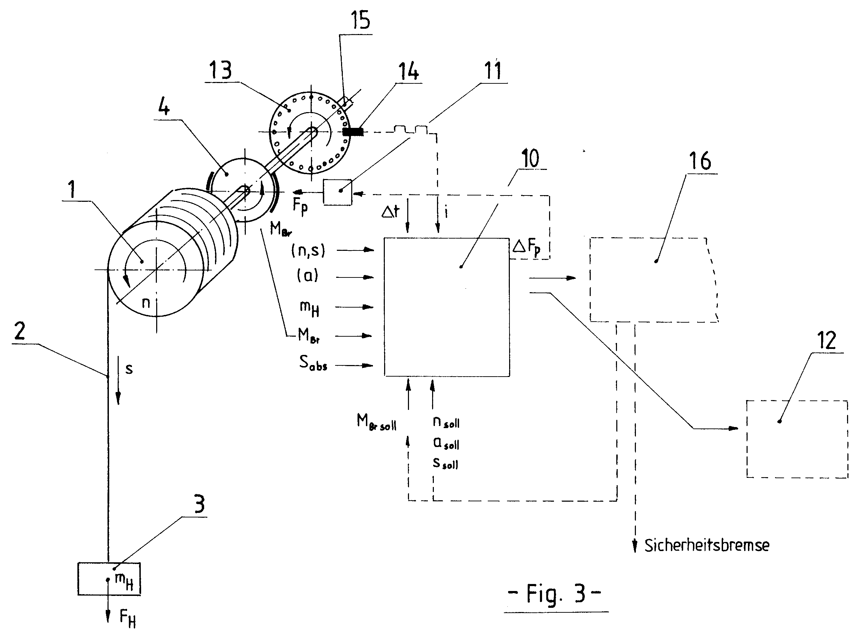

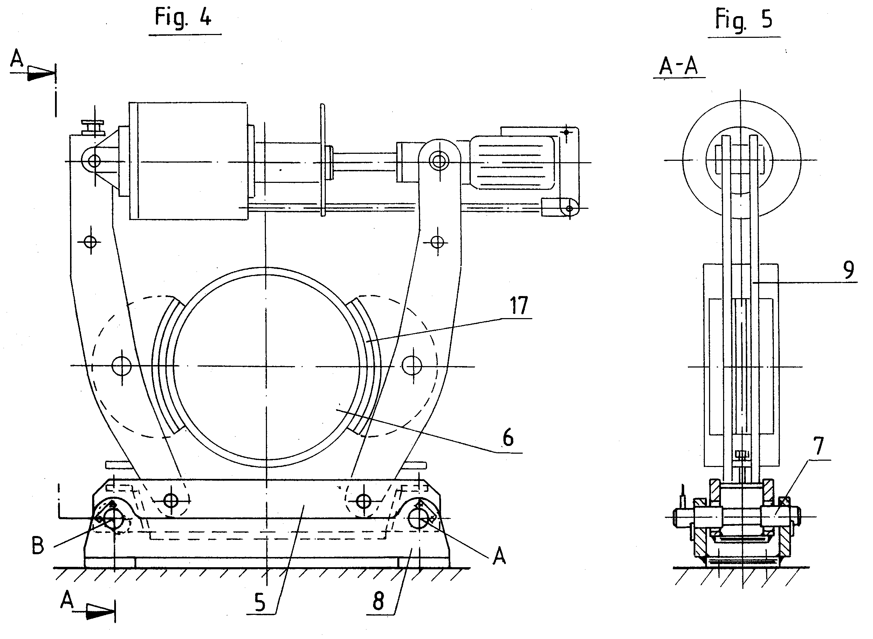

Die Überwachungseinrichtung für eine Trommelbremse ist in Fig. 1 offenbart. Das dargestellte Hubwerk besteht aus einer Seiltrommel 1 und einem Seil 2 sowie einer einer angehängten Masse 3. Hinter der Seiltrommel 1 ist eine Doppelbackenbremse 4a montiert, die über eine Bremstrommel 6 ein Bremsmoment auf das Hubsystem ausübt. Dieses Bremsmoment wird durch eine zweckmäßige Anordnung von zusätzlichen Lagerpunkten nach Fig. 4 erfaßt. Hierbei ist der Bremsenfuß als Meßkonsole 5 mit den zwei Lagerpunkten A und B ausgebildet.
Von der handelsüblichen Trommelbremse 9 werden alle Teile außer dem Bremsenfuß verwendet.
Das Lager A ist als gelenkiges Festlager und das Lager B als verschiebbares Loslager ausgebildet und die Bremse infolgedessen statisch bestimmt gelagert. Das Loslager B nimmt nur eine Kraft auf, deren Kraftrichtung durch den Mittelpunkt der Bremstrommel 6 geht. Zur Bestimmung dieser Kraft ist das Lager mit einem Kraftmeßgeber in Form eines Kraftmeßbolzens 7 versehen. Der Lagerbock 8 nimmt die Kräfte auf und leitet sie über Schraubverbindungen in das Fundament weiter. Der Kraftmeßbolzen 7 liefert eine momentproportionale Meßspannung und ist mit der Signalverarbeitungseinheit 10 verbunden. Die Signalverarbeitungseiheit 10 besteht im wesentlichen aus einem handelsüblichen Meßverstärker mit Sollwertspeicher.
Eine solche Einrichtung dient zum Prüfen und Überwachen der Bremsen.
Wird die Signalverarbeitungseinheit 10, wie nach Fig. 2 dargestellt, über einen Signalausgang mit dem regelbaren Lüft- bzw. Schließgerätes 11 verbunden, entsteht aus dieser Einrichtung ein einfacher Regelkreis.
Als regelbares Lüft- bzw. Schließgerät 11 wird ein elektrisch oder hydraulisch regelbares Bremslüftgerät handelsüblicher Bauart vorgeschlagen, was ohnehin Bestandteil der Bremse ist. Dadurch wird eine Vergrößerung oder Veringerung der Anpreßkräfte F_{P} der Bremsbacken 17 an der Bremstrommel 6 erreicht. Somit steigt das Bremsmoment nach dem Einfallen der Bremse 4a kontinuierlich bis zu dem vorgegebenen Sollwert an und wird danach konstant bis zum Stillstand gehalten. Bei Bedarf ist eine Einstellung verschiedener Sollwerte je nach Erfordernis oder Anwendungsfall vorgesehen. Für die Trommelbremse 4a einschließlich des Regelsystems 10, 11 ist der Anschluß eines externen Prüfsystems 12 für die zyklisch wiederkehrenden Prüfungen vorgesehen. Der Anschluß erfolgt über einen Steckkontakt.
Dieses Bremsmomentenregelsystem ist durch das Hinzufügen zusätzlicher elektronischer Funktionseinheiten erweiterbar. Eine mögliche Variante für einen solchen Aufbau ist in der Zeichnung nach Fig. 3 offenbart. Der Grundaufbau entspricht der einfachen Ausführung nach Fig. 2. Zusätzlich dazu wurde auf der Trommelwelle 15 eine Meßscheibe 13, die mit radial angeordneten Löchern versehen ist, angebracht. Durch eine an der Scheibe angeordnete Lichtschranke 14 werden drehzahlproportionale Impulse erzeugt, aus denen die Signalverarbeitungseinheit 10 unter Einbeziehung eines Zeittaktsignales Δt alle erforderlichen kinematischen Größen wie z.B. Drehzahl, Beschleunigung, Weg oder Geschwindigkeit bestimmt. Als Signalverarbeitungseinheit 10 wird vorzugsweise ein Meßcomputersystem verwendet, das durch entsprechende Steckkartenerweiterungen an die spezielle Meßaufgabe angepaßt werden kann. Alternativ zur Lochscheibe 13 ist die Ausrüstung des Systems auch mit anderen digitalen Gebern vorgesehen. Der Signalverarbeitungseinheit 10 werden wieder bestimmte Sollwerte vorgegeben, die entweder fest programmiert oder den jeweiligen Anforderungen angepaßt sind (z.B. veränderliche Hubmasse m_{H} ).
Bei Bedarf ist alternativ die Vorgabe der Sollwerte durch eine vorhandene externe Steuerung 16 vorgesehen. Auch hier können die Sollwerte z.B. für Bremsmoment, Bremsbeschleunigung oder Bremsweg fest vorgegeben oder aktualisiert werden. Das Bremsmomentenregelsystem beinhaltet somit auch eine kontinuierliche Überwachung des Bremsvorganges und ständige Korrektur der vorgegebenen Sollwerte, sodaß z.B. während des Bremsvorganges ständig der Abstand zu einem vorgegebenen Haltepunkt ermittelt und das erforderliche Bremsmoment bzw. die erforderliche Bremsverzögerung zum Anhalten an diesem Punkt errechnet wird. Wie beim einfachen Regelsystem nach Fig. 2 wird über einen Signalausgang ein regelbares Lüft- bzw. Schließgerät 11 angesteuert. Dadurch wird über die Veränderung der Anpreßkraft F_{P} der Bremsbacken 17 an die Bremstrommel 6 das Bremsmoment beeinflußt. Damit ist auch hier ein geschlossener Regelkreis realisiert.
Für die Prüfung der Bremse 4a einschließlich des kompletten Regelsystems 10, 11, 13 und 14 ist der Anschluß eines externen Prüfsystems 12 bei den zyklisch wiederkehrenden Prüfungen über einen Steckkontakt vorgesehen. Bei der Integration des Regelsystems in die vorhandene Steuerung 16 ist auch die Prüfung der Sollwertvorgaben durch das Prüfsystem beabsichtigt.
Für erweiterte regelungstechnische Aufgabenstellungen und/oder hohe Sicherheitsanforderungen erfolgt eine ständige Auswertung und Überprüfung der Regelungsvorgänge durch die Steuerung 16. Diese würde dann z.B. beim Nichterreichen eines erforderlichen Bremsmomentes während des Bremsvorganges eine zweite Bremse (z.B. eine Sicherheitbremse) automatisch zuschalten, bevor ein kritischer Zustand erhöhter kinematischer Energie entsteht.

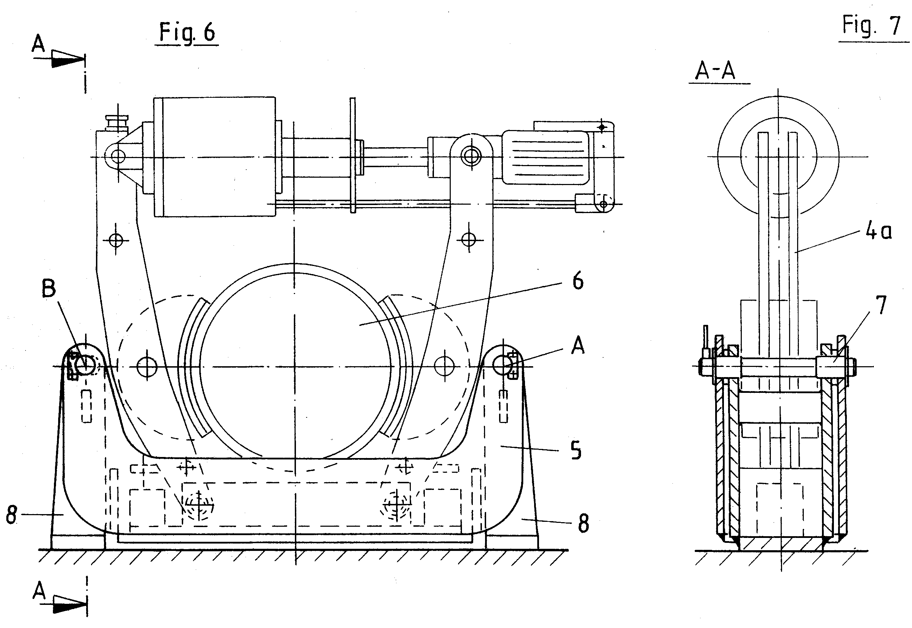

Eine zweite Möglichkeit für die Erfassung der Bremsmomente bei einer Doppelbackenbremse besteht nach den Figuren 6 und 7 in der Anordnung der Lagerpunkte A und B in der gemeinsamen Ebene mit dem Mittelpunkt der Bremstrommel 6. Die handelsübliche, standardisierte Trommelbremse 4a ist komplett auf die Meßkonsole 5 aufgeschraubt. Die Meßkonsole ist wieder im gelenkigen Festlager A und im verschiebbaren Loslager B statisch bestimmt gelagert. In Lager B ist ein Kraftmeßgeber in Form eines Kraftmeßbolzens 7 angeordnet, der die infolge des Drehmomentes im Lager B entstehende Kraft in vertikaler Richtung aufnimmt. Die beiden Lagerböcke 8 nehmen die Kräfte auf und leiten sie über Schraubverbindungen in das Fundament weiter.

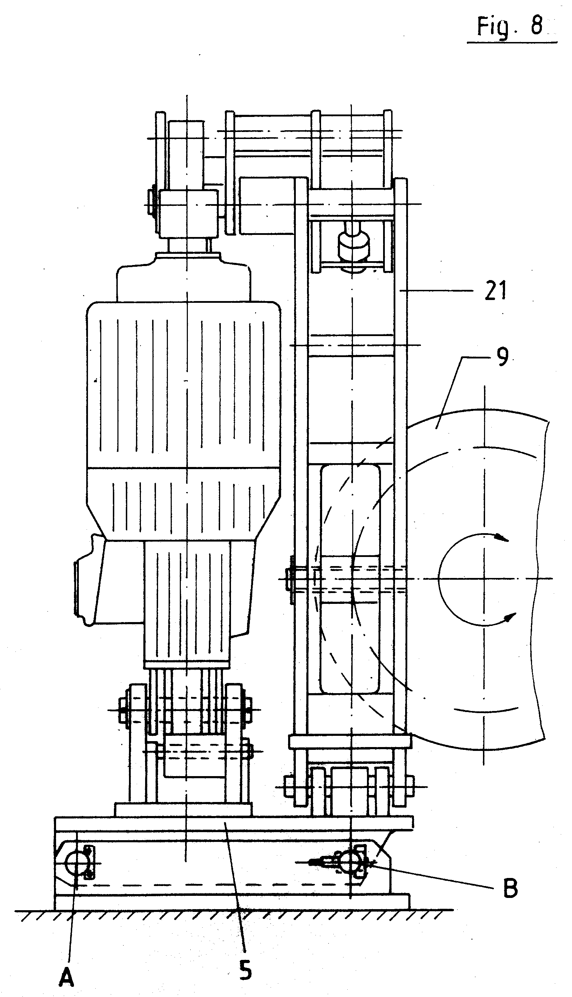

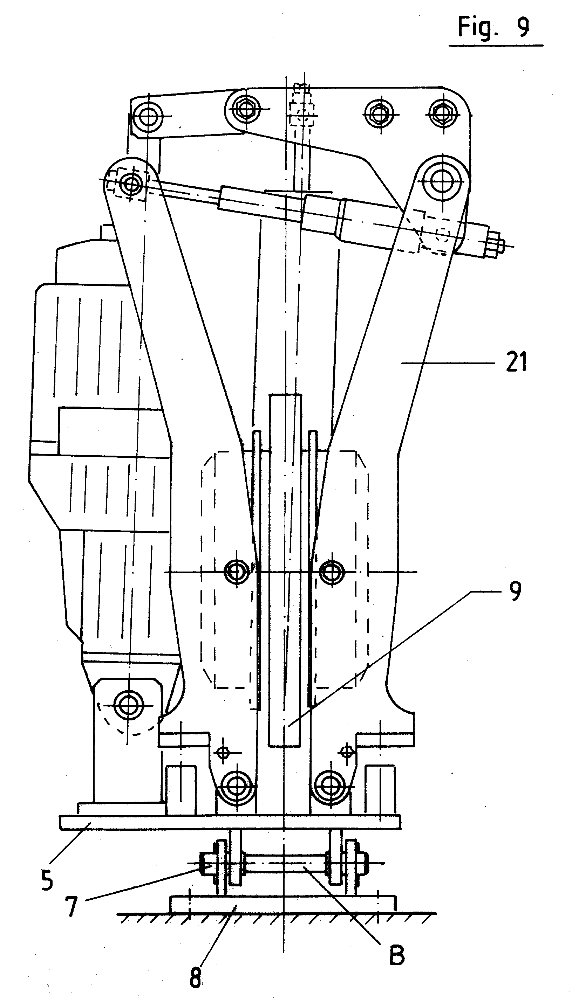

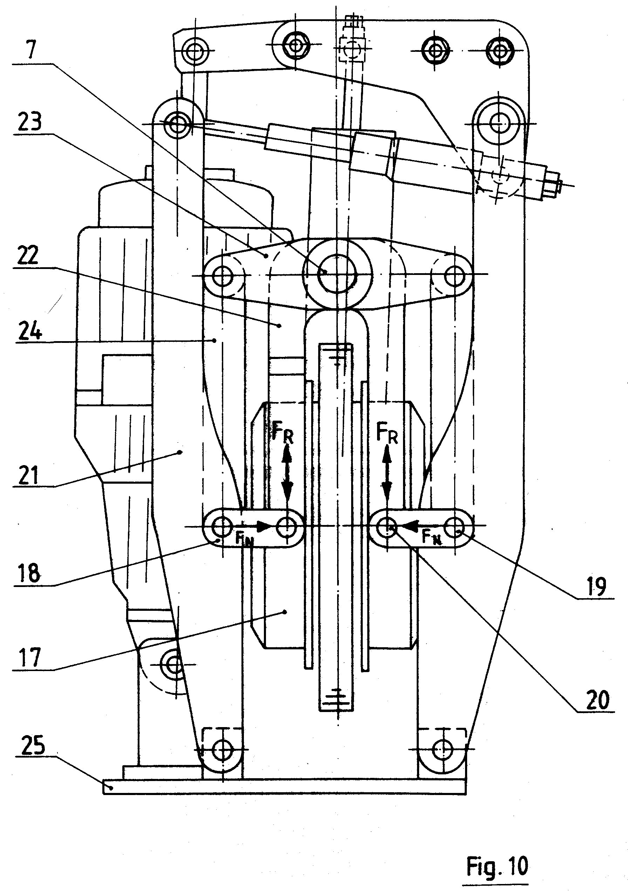

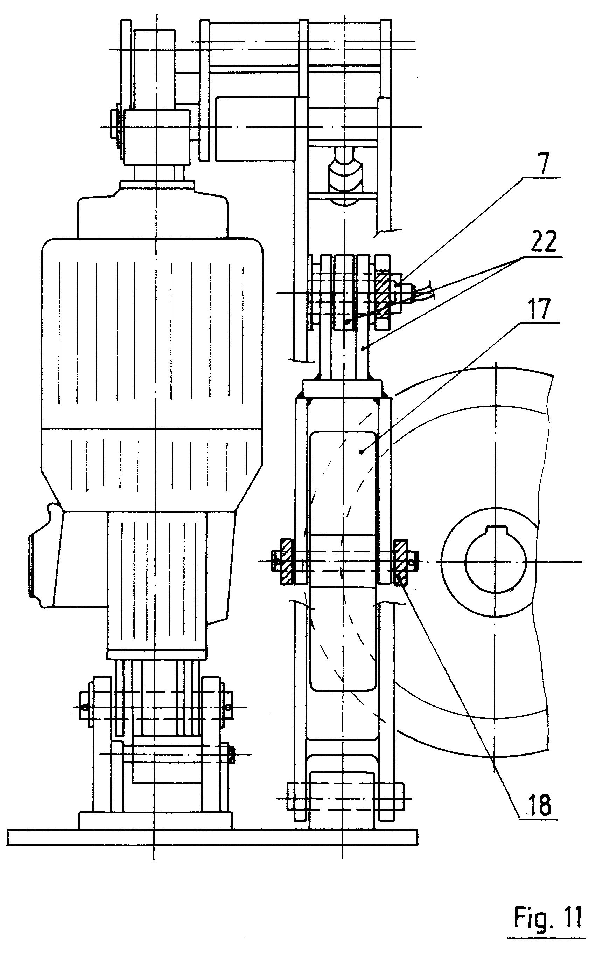

Nach den Figuren 8 und 9 ist eine mögliche Anordnung zur Erfassung des Bremsmomentes einer Scheibenbremse 4b dargestellt. Hierbei ist der Bremsenfuß als Meßkonsole 5 mit zwei Lagerpunkten A und B ausgebildet.
Das Lager A ist wiederum als gelenkiges Festlager und das Lager B als verschiebbares Loslager ausgebildet. Das Loslager B ist direkt in der Wirkungslinie der entstehenden Haltekräfte der Bremszangen am theoretischen Reibdurchmesser angeordnet und mit einem Kraftmeßgeber in Form eines Kraftmeßbolzens 7 versehen. Das Loslager B nimmt somit die gesamte vertikale Kraft auf, durch deren Wirkung an der Bremsscheibe 9 das Moment entsteht. Zur Bestimmung dieser Kraft ist das Lager B mit einem Kraftmeßgeber in Form eines Meßbolzens 7 versehen. Über den Lagerbock 8 werden die Kräfte in das Fundament eingeleitet. Eine mögliche konstruktive Ausführung der Gestängelagerung zur mechanischen Aufteilung der Kraftkomponenten einer Scheibenbremse 4c ist nach den Figuren 10 und 11 dargestellt. Die Lagerung der Bremsbacken 17 erfolgt an einem horizontalen Druckhebel 18. Durch diesen Druckhebel 18 sind die Bremsbacken 17 über die Bolzen 19 und 20 gelenkig mit den Bremshebeln 21 verbunden und dienen zur Übertragung der Anpreßkräfte F_{N} aus den Bremshebeln 21 auf die Bremsbacken 17.
Zur Fixierung der Bremsbacken 17 und Übertragung der vertikalen Reibungskräfte F_{R} auf den Meßbolzen 7 sind die Stützen 22 vorgesehen. Sie führen die beiden vertikalen Lasten F_{R} der rechten und linken Seite in einem Punkt zusammen. Dort ist der Meßbolzen 7 angeordnet und liefert einen kraft- bzw. momentenproportionalen elektrischen Meßwert, der zur weiteren Bearbeitung zur Verfügung steht. Als Meßbolzen 7 ist ein handelsüblicher Scherkraftmeßbolzen mit Dehnungsmeßstreifen vorgesehen. Er ist über den Pendelhebel 23, die Lenker 24 und die Bolzen 19 in den Bremshebeln 21 gelagert, welche die Reibungskräfte dann in den Bremsfuß 25 weiterleiten.
Diese Anordnung gewährleistet einen inneren geschlossenen Kraftfluß, sodaß weitere Veränderungen an den genormten Scheibenbremsen 4c nicht erforderlich sind. Alle anderen Bauteile können übernommen werden.

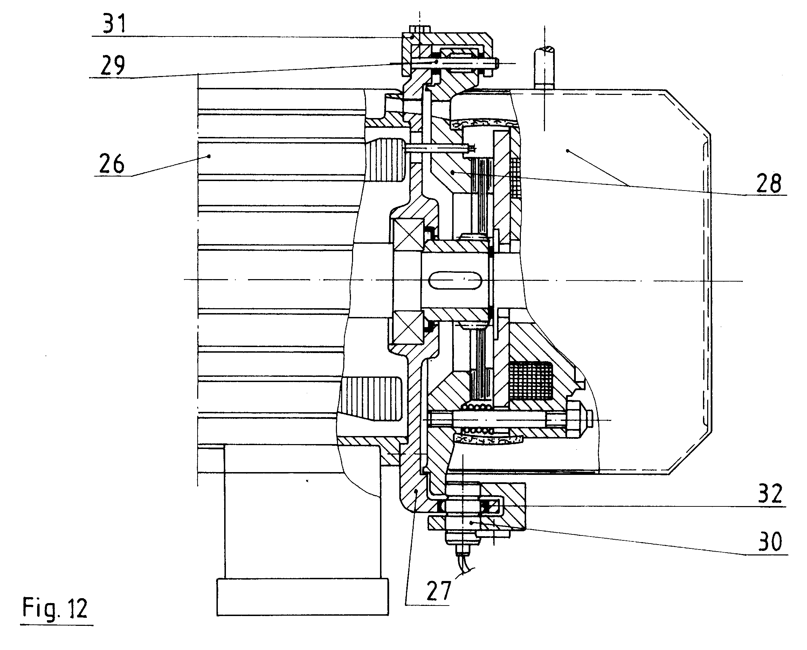

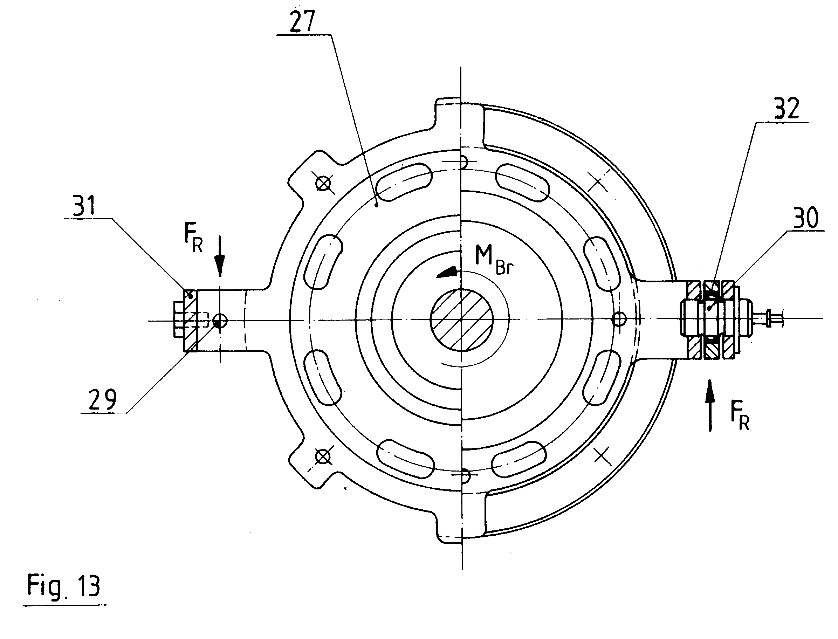

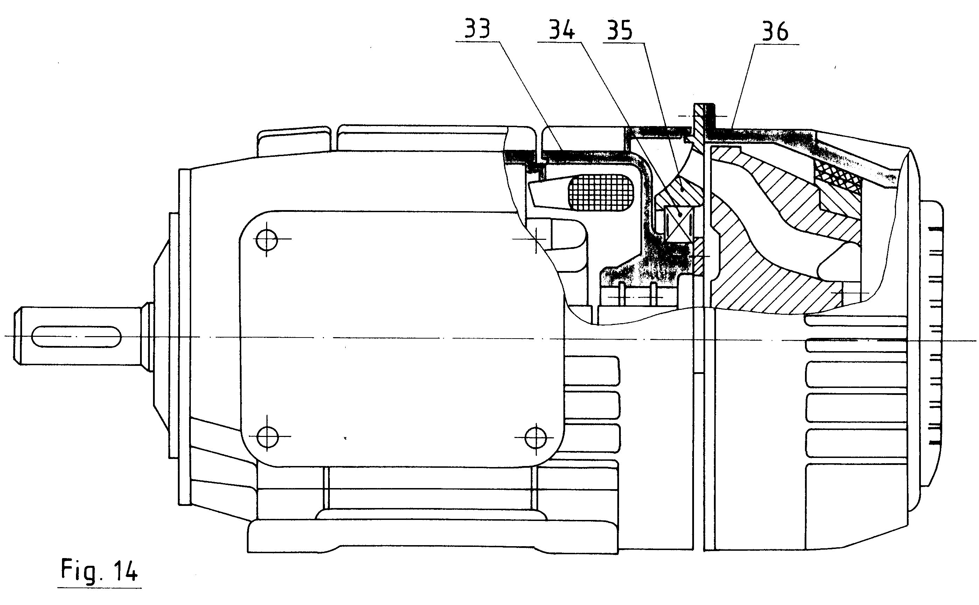

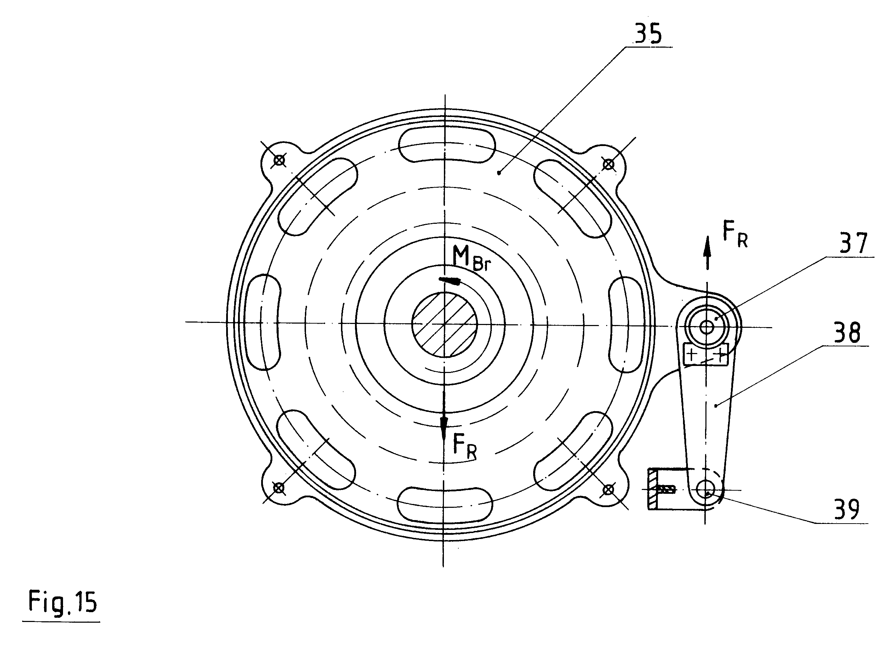

Eine mögliche Bremsmomenterfassungsanordnung für einen Bremsmotor 4d ist in den Zeichnungen nach den Figuren 12 und 13 offenbart.
Mit dem Motorengehäuse 26 (Stator) ist ein festes Lagerschild 27, das gleichzeitig die hintere Rotorlagerung trägt, verschraubt. Die Motorbremse 28 ist über einen Bolzen 29, der ein gelenkiges Festlager darstellt, und einen Bolzen 30, der als gelenkiges Loslager wirkt, mit dem festen Lagerschild 27 und damit mit dem Motor verbunden.
Das infolge des auftretenden Bremsmomentes M_{Br} entstehende Kräftepaar F_{R} wird durch die Bolzen 29 und 30 aufgenommen. Gleichzeitig garantiert die Anordnung des Bolzens 30 und die Befestigung der Lagerkappe 31 am Bolzen 29, daß auch alle radialen und axialen Kräfte zwischen Bremse 28 und Motorgehäuse 26 übertragen werden.
Für die meßtechnische Erfassung des Bremsmomentes M_{Br} dient der Bolzen 30, der als Scherkraftmeßbolzen über ein gelenkiges Lager 32 die Reaktionskraft F_{R} aufnimmt und über Dehnungsmeßstreifen ein momentproportionales elektrisches Signal abgibt. Die statisch bestimmte Anordnung ist in Fig. 13 als vereinfachter Schnitt durch die Lagerung nochmals dargestellt.
Eine zweite Variante für eine Vorrichtung zur Bremsmomenterfassung für einen Bremsmotor ist in den Zeichnungen nach den Figuren 14 und 15 dargestellt. Danach ist der unbewegliche Teil des Motors, der Stator 33, mit einem Wälzlager 34 über einen Zwischenflansch 35 mit dem Bremsgehäuse der Kegelbremse 36 verbunden. Das Lager 34 ist so angeordnet, daß es alle axialen und radialen Kräfte zwischen Motor 33 und Bremse 36 aufnimmt und lediglich Drehbewegungen zuläßt. Der Zwischenflansch 35 ist mit Durchbrüchen versehen, um einen ungehinderten Durchgang der Luft zur Kühlung zu gewährleisten.
Das beim Einfallen der Kegelbremse entstehende Bremsmoment M_{Br} wird durch die Kombination des Wälzlagers 34 mit einer Drehmomentenstütze, bestehend aus einem Meßbolzen 37, einer gelenkig gelagerten Schwinge 38 und einem gelenkigen Festpunkt 39 in ein Kräftepaar F_{R} umgewandelt. Diese Umfangskraft F_{R} wird über den Meßbolzen 37 in einen momentenproportionalen Meßwert, der zur weiteren Auswertung zur Verfügung steht, umgewandelt.
Der Festpunkt 39 ist am unbeweglichen Teil des Motors, dem Stator 33 bzw. dem Gehäuse, angeordnet. In der Zeichnung nach Fig. 15 ist alternativ eine Befestigung außerhalb des Motors dargestellt.
Die Anordnung der Meßbolzen 30 bzw. 37 außerhalb des Motors gestattet bei beiden Lösungsvarianten für einen Bremsmotor eine einfache Kontrolle und Überprüfung der Meßeinrichtung bei den erforderlichen Inspektionen.

## Patentansprüche

1. Einrichtung zur Prüfung, Überwachung und Regelung von mechanischen Bremsen für rotatorische Bewegungen, dadurch gekennzeichnet,
- daß zur Prüfung der Bremse (4) eine Drehmomentenmeßeinrichtung,
- zur Überwachung der Bremse (4) eine mit der Meßvorrichtung in fuktioneller Verbindung stehende Signalverarbeitungseineit (10 ) und
- zur belastungsabhängigen Regelung der Bremse (4) eine mit den vorgenannten Elementen zusammenwirkende Steuereinheit vorgesehen ist und so einen Regelkreis bildet.

2. Einrichtung nach Anspruch 1, dadurch gekennzeichnet,
- daß ein Regelkreis, bestehend aus einer Drehmomentenmesseinrichtung, einer Signalverarbeitungseinheit (10) und einem steuerbaren Lüft- bzw. Schließgerät (11) mit einer Bremse (4) in funktionelle Verbindung gebracht werden,
- daß alternativ Geräte zur Messung von Drehzahl, Weg oder Beschleunigung,von äußeren Belastungen (z. B. Hublasten) oder des absoluten Weges in den Regelkreis integriert werden,
- daß die Signalverarbeitungseinheit (10), vorzugsweise ein Meßverstärker mit Sollwertspeicher oder ein Computer in kurzen, diskreten Zeitabständen die Meßwerte aufnimmt und so verarbeitet, daß über ein entsprechendes Steuersignal die Größe des Bremsmomentes an der Bremse (4) direkt beeinflußt wird
- und daß dieses Steuersignal auf das hydraulische, pneumatische oder elektrische Lüft- bzw. Schließgerät (11) an der Bremse (4) einwirkt,
- daß je nach der Größe des Steuersignals eine Vergrößerung oder Verminderung des Bremsmomentes vorgesehen ist,
- der Signalverarbeitungseinheit (10) je nach Erfordernis verschiedenartige Sollwerte wie z. B. Bremsmoment, Drehzahl, Bremsverzögerung, Bremsweg oder Bremszeit fest vorgegeben sind
- und daß der maßgebende Sollwert und dessen Größe auch von einer externen Steuerung (16) nach einem festgelegten Programm bestimmt und auch veränderbar ist.

3. Einrichtung nach Anspruch 1 und 2, dadurch gekennzeichnet,
- daß die Bremse (4) eine Trommelbremse (4a) ist
- und diese Trommelbremse (4a) auf einer um einen festen Gelenkpunkt A drehbar gelagerten Meßkonsole (5) befestigt ist oder die Meßkonsole (5) selbst einen Teil der Trommelbremse (4a) ist,
- daß durch einen zweites loses Lager B die infolge des Drehmomentes im Gelenkpunkt A entstehende Kraftkomponente vollständig in Größe und Richtung aufgenommen und kompensiert wird
- und die beiden Lagerpunkte A und B auch symmetrisch mit gleichem Abstand vom Mittelpunkt der Bremstrommel (6) oder unsymmetrisch davon auf einer Geraden durch eben diesen Mittelpunkt liegen können,
- daß in den beiden Lagerpunkten A und B Kräfte entstehen, die in ihrem Betrag genau gleich und in ihrem Richtungsvektor genau entgegengesetzt sind
- wobei sich die Wirkungen dieser Kräfte infolgedessen aufheben,
- daß einer oder beide Lagerpunkte A und/oder B mit Kraftmeßgebern ausgestattet sind
- und aus den Meßwerten der gemessenen Kraft das Drehmoment an der Trommelbremse (4a) bestimmt wird.

4. Einrichtung nach Anspruch 1 und 2, dadurch gekennzeichnet,
- daß die Bremse (4) eine Scheibenbremse (4b) ist
- und diese Scheibenbremse (4b) auf einer um einen festen Gelenkpunkt A drehbar gelagerten Meßkonsole (5) befestigt ist oder die Meßkonsole (5) selbst ein Teil der Scheibenbremse (4b) ist,
- daß die Anordnung durch einen zweites loses Lager B fixiert wird
- und die Meßkonsole (5) in den Lagerpunkten A und B mit dem Bremsenfuß zur Aufnahme der Stützkraft verbunden ist
- und einer oder beide Lagerpunkte A und/oder B mit Kraftmeßgebern ausgestattet sind
- und daß aus den Meßwerten der gemessenen Kraft das Drehmoment an der Scheibenbremse (4b) bestimmt wird.

5. Einrichtung nach Anspruch 4, dadurch gekennzeichnet,
- daß für die Erfassung der Reibungkräfte innerhalb der Scheibenbremse (4c) eine besondere Lagerung der Bremsschuhe (17) vorgesehen ist
- und dazu die mechanische Trennung der Reibungs- und Anpreßkräfte durch eine gelenkige Aufhängung der Bremsschuhe (17) an je einem Druckhebel (18) und je einer Stütze (22) erfolgt
- wobei über den Druckhebel (18) die horizontalen Anpreßkräfte eingeleitet werden
- und die vertikalen Reibungskräfte über die gelenkig gelagerten Stützen (22) in einem gemeinsamen Kraftmeßbolzen (7) zusammengeführt werden
- und der Kraftmeßbolzen (7) über gelenkige Pendelhebel (23) und Lenker (24) in den Bremshebeln (21) gelagert ist
- oder alternativ zwei andere Kraftmeßbolzen mit einer definierten Meßrichtung direkt als Bremsschuhlagerung (20) so eingebaut sind, daß sie nur die vertikale Reibungskraft erfassen,
- daß die Meßwerte dieser Kraftmeßbolzen (20) elektrisch zu einem Gesamtmeßwert zusammengefaßt werden
- und daß bei beiden Varianten aus den Meßwerten der gemessenen Kraft das Drehmoment an der Scheibenbremse (4c) bestimmt wird.

6. Einrichtung nach Anspruch 3 bis 5, dadurch gekennzeichnet, daß entweder ein Lager A oder B als Festlager und ein Lager B oder A als verschiebliches Loslager ausgebildet ist und infolgedessen die Trommelbremse (4a) oder die Scheibenbremse (4b) statisch bestimmt gelagert ist oder die Anordnung von zwei festen Lagern A und B oder eines Meßtisches vorgesehen ist und eine kontinuierliche Erfassung des Bremsmomentes der Bremse (4) während des laufenden Betriebes d. h. bei jedem Bremsvorgang ermöglicht wird und daß der normale Bremsenfuß, der die Bremshebel gelenkig aufnimmt, entweder als Meßkonsole ausgebildet oder auf einer Meßkonsole befestigt ist.

7. Einrichtung nach Anspruch 1 und 2, dadurch gekennzeichnet,
- daß als Bremse eine in einen Elektromotor integrierte Lamellen- oder Kegelbremse vorgesehen ist
- und die Lagerung der Motorbremse (4d) statisch bestimmt mittels zweier gelenkiger Bolzenlager, die als ein Fest- und ein Loslager ausgebildet sind, erfolgt,
- und ein Lagerpunkt mit einem Kraftmeßgeber, vorzugsweise einem Kraftmeßbolzen (30, 37) versehen ist
- und daß an diesem Kraftmeßgeber ein dem Bremsmoment proportionales elektrisches Signal abgenommen wird
- oder alternativ die Lagerung einer Motorbremse (4d) durch ein Wälzlager (34) erfolgt, welches den Stator des Motors (33) und die angesetzte Bremse drehbar verbindet
- und dieses Wälzlager (34) so angeordnet ist, daß alle radialen und axialen Kräfte zwischen Stator (33) und Bremse übetragen werden, eine ungehinderte Verdrehung aber zugelassen wird
- und daß das beim Bremsen entstehende Reaktionsdrehmoment durch eine außen angebrachte gelenkig gelagerte Momentenstütze (37,38,39) abgefangen wird
- und diese Momentenstütze (37,38,39) mit einem Kraftmeßgeber, vorzugsweise einem Kraftmeßbolzen (37), an dem ein dem Bremsmoment proportionales elektrisches Ausgangssignal abgenommen wird, versehen ist
- und daß die beiden vorgeschlagen Zusatzeinrichtungen eine kontinuierliche Erfassung des Bremsmomentes der Motorbremse (28,36) während des laufenden Betriebes d. h. bei jedem Bremsvorgang ermöglichen
- und die beiden Lagerungen so gewählt wurden, daß zur Ermittlung des Meßwertes keine Verdrehung oder Verschiebung während des Bremsvorganges stattfindet, und daß keine federnden Elemente verwendet werden.

8. Einrichtung nach Anspruch 1 und 2, dadurch gekennzeichnet, daß die kinematischen Meßgrößen Drehzahl, Geschwindigkeit, Weg und Bremsverzögerung durch eine Meßscheibe (13) mit einer radialen Loch- oder Stricheinteilung und einer Lichtschranke (14) oder durch externe Geber z. B. Inkrementalgeber, Tachogenerator, Beschleunigungsaufnehmer erfaßt und in der Signalverarbeitungseinheit (10) unter der Einbeziehung eines Zeittaktes bestimmt und ausgewertet bzw. zur Weitergabe bereitgestellt werden.

9. Einrichtung nach Anspruch 1 und 2, dadurch gekennzeichnet, daß die Größe des Bremsmomentes durch eine Bremsmomentenerfassungseinrichtung aufgenommen und in einer Signalverarbeitungseinheit (10) bestimmt und ausgewertet bzw. zur Weitergabe bereitgestellt wird und daß durch die Signalverarbeitungseinheit (10) mehrere Bremsen (4) überwacht und beeinflußt werden können.

10. Einrichtung nach Anspruch 1 bis 7, dadurch gekennzeichnet,
- daß alle Meßwerte und/oder Signale bei den zyklisch wiederkehrenden Prüfungen zur Überprüfung der Sicherheit und Funktionsgüte der Bremse (4) bzw. des gesamten Systems an ein externes Prüfsystem (12) weitergeleitet werden können
- und dieses Prüfsystem (12) auch für eine Überprüfung der ablaufenden Regelvorgänge und Kontrolle der Sollwertvorgaben während des Bremsvorganges geeignet ist
- und alternativ diese Meßwerte und/oder Signale bei jedem Bremsvorgang ausgewertet, angezeigt, mit einem Sollwert oder einer Sollfunktion verglichen oder daß sie an ein externes, kontinuierlich arbeitendes Prüfsystem (12) oder eine programmierbare Steuerung (16) weitergeleitet werden können
- und die Anlage bei Unterschreitung gegebenenfalls automatisch stillgesetzt und/oder ein redudantes Bremssystem zugeschaltet wird.
